# EUROPÄISCHE PATENTSCHRIFT

(11) **EP 0 960 908 B1**
(45) Veröffentlichungstag und Bekanntmachung des Hinweises auf die Patenterteilung: **29.09.2004**
(21) Anmeldenummer: 99109843.5
(22) Anmeldetag: 19.05.1999
(51) Int. Cl.: C08L 23/08, C10L 1/18

(54) **Mischungen von Copolymeren mit verbesserter Schmierwirkung**
Blends of copolymers with improved lubricating activity
Mélange de copolymères ayant une action lubrifiante améliorée

(30) Priorität: 27.05.1998 DE 19823565
(43) Veröffentlichungstag der Anmeldung: 01.12.1999
(73) Patentinhaber: Clariant GmbH, 65929 Frankfurt am Main (DE)
(72) Erfinder: Krull, Matthias Dr., 46147 Oberhausen (DE); Reimann, Werner Dr., 65929 Frankfurt (DE); Kupetz, Markus, 46539 Dinslaken (DE)

(56) Entgegenhaltungen:
- WO-A-95/33805
- US-A- 4 015 063
- US-A- 4 906 682
- DATABASE WPI Section Ch, Week 8613 Derwent Publications Ltd., London, GB; Class A17, AN 86-084984 XP002114871 & JP 61 031445 A (SHOWA DENKO KK), 13. Februar 1986 (1986-02-13)

## Beschreibung

Die vorliegende Erfindung betrifft Mischungen öllöslicher Copolymere aus Ethylen und weiteren Comonomeren, die eine oder mehrere Hydroxylgruppen enthalten und Copolymeren aus Ethylen und ethylenisch ungesättigten Verbindungen, sowie deren Verwendung zur Verbesserung der Schmierfähigkeit von Brennstoffölen.

Mineralöle und Mineralöldestillate, die als Brennstofföle verwendet werden, enthalten im allgemeinen 0,5 Gew.-% und mehr Schwefel, der bei der Verbrennung die Bildung von Schwefeldioxid verursacht. Um die daraus resultierenden Umweltbelastungen zu vermindern, wird der Schwefelgehalt von Brennstoffölen immer weiter abgesenkt. Die Dieseltreibstoffe betreffende Norm EN 590 schreibt in Deutschland zur Zeit einen maximalen Schwefelgehalt von 500 ppm vor. In Skandinavien kommen bereits Brennstofföle mit weniger als 200 ppm und in Ausnahmefällen mit weniger als 50 ppm Schwefel zur Anwendung. Diese Brennstofföle werden in der Regel dadurch hergestellt, daß man die aus dem Erdöl durch Destillation erhaltenen Fraktionen hydrierend raffiniert. Bei der Entschwefelung werden aber auch andere Substanzen entfernt, die den Brennstoffölen eine natürliche Schmierwirkung verleihen. Zu diesen Substanzen zählen unter anderem polyaromatische und polare Verbindungen.

Es hat sich nun aber gezeigt, daß die reibungs- und verschleißmindernden Eigenschaften von Brennstoffölen mit zunehmendem Entschwefelungsgrad schlechter werden. Oftmals sind diese Eigenschaften so mangelhaft, daß an den vom Kraftstoff geschmierten Materialien wie z.B. den Verteiler-Einspritzpumpen von Dieselmotoren schon nach kurzer Zeit mit Fraßerscheinungen gerechnet werden muß. Die mittlerweile in Skandinavien vorgenommene weitere Absenkung des 95 %-Destillationspunkts auf unter 370°C, teilweise auf unter 350°C oder unter 330°C verschärft diese Problematik weiter.

Im Stand der Technik sind daher Ansätze beschrieben, die eine Lösung dieses Problems darstellen sollen (sogenannte Lubricity-Additive).

DD-126 090 offenbart schmierverbessernde Additive aus Copolymerisaten von Ethylen und ungesättigten Carbonsäureestern, vorzugsweise Vinylacetat, die den Kraftstoffen in Mengen von 0,01 bis 0,5 Gew.-% zugesetzt werden.

EP-A-0 743 974 offenbart Additive, die die Schmierwirkung von Brennstoffölen verbessern, und die Mischungen aus Estern und Copolymeren aus Ethylen und Vinylacetat enthalten.

WO-95/33805 offenbart die Verwendung von Kaltfließverbesserern als Lubricity-Enhancer.

EP-A-0 074 208 offenbart Mittel- und Schwerdestillate, die mit Copolymeren aus Ethylen und oxalkylierten Acrylaten oder Ethylen und Vinylestern gesättigter und ungesättigter Carbonsäuren additiviert sind.

US-4 906 682 offenbart Kaltfließverbesserer, welche Copolymere aus Ethylen und Vinylacetat in Abmischung mit Polyalkyl(meth)acrylaten enthalten.

US-4 015 063 offenbart Kälteadditive für Roh- und Rückstandsöle, die Terpolymere aus Ethylen, Vinylacetat und Vinylcarbinol umfassen.

Die Schmierwirkung der bekannten Additive ist in vielen Ölen jedoch noch unbefriedigend bzw. es werden sehr hohe Dosierraten zur Erzielung befriedigender Ergebnisse benötigt. Aufgabe der vorliegenden Erfindung war es daher, Additive zu finden, die in weitgehend von Schwefel und aromatischen Verbindungen befreiten Mitteldestillaten zu einer Verbesserung der Schmierwirkung führen und dies mit dem Einsatz möglichst geringer Mengen erreichen.

Überraschenderweise wurde gefunden, daß Mischungen aus Copolymeren, die neben Ethylen auch hydroxylgruppenhaltige Comonomere enthalten und solchen Copolymeren, die aus Ethylen und olefinisch ungesättigten Estern oder Ethern bestehen, die geforderten Eigenschaften zeigen.

Gegenstand der Erfindung sind somit Mischungen, enthaltend
A) 10 bis 90 Gew.-% wenigstens eines Copolymers mit einer Schmelzviskosität bei 140°C von 10 bis 1000 mPas, enthaltend Struktureinheiten, die sich aus Ethylen ableiten und Struktureinheiten, die sich aus Vinylestern, Acrylestern, Methacrylestern, Alkylvinylethern und/oder Alkenen, die Hydroxyalkyl-, Hydroxyalkenyl-, Hydroxycycloalkyl- oder Hydroxyarylreste tragen, welche wenigstens eine Hydroxylgruppe, die an einer beliebigen Stelle des Restes stehen kann, ableiten
   und
B) 90 bis 10 Gew.-% wenigstens eines Copolymers, bestehend aus Struktureinheiten aus Ethylen und Struktureinheiten aus Vinylestern, olefinisch ungesättigten Ethern oder (Meth)Acrylsäureestern wobei Copolymer B) auch ein Terpolymer ausgewählt aus der Gruppe Ethylen/Vinylacetat/Diisobutylen-, Ethylen/Vinylacetat/Isobutylen-, Ethylen-Vinylacetat-Hexen-Terpolymere, oder Terpolymere aus Ethylen, dem Vinylester einer oder mehrerer aliphatischer C₂-C₂₀-Monocarbonsäuren und 4-Methylpenten-1 sein kann.

Ein weiterer Gegenstand der Erfindung sind Brennstofföle, die die beschriebenen Mischungen aus Copolymeren enthalten.

Ein weiterer Gegenstand der Erfindung ist ein Verfahren zur Verbesserung der Schmierwirkung von Brennstoffölen bei gleichzeitiger Verbesserung von deren Kaltfließeigenschaften, gekennzeichnet durch die Zugabe der beschriebenen Kombinationen von Copolymeren zu den Brennstoffölen.

Bei den olefinisch ungesättigten Verbindungen, von denen sich die nicht-ethylenischen Struktureinheiten der weiteren Comonomere in Komponente A) ableiten, handelt es sich vorzugsweise um Vinylester, Acrylester, Methacrylester, Alkylvinylether und/oder Alkene, die Hydroxyalkyl-, Hydroxyalkenyl-, Hydroxycycloalkyl- oder Hydroxyarylreste tragen. Diese Reste enthalten wenigstens eine Hydroxylgruppe, die an einer beliebigen Stelle des Restes stehen kann, bevorzugt aber am Kettenende (ω-Stellung) steht.

Bei den Vinylestern handelt es sich vorzugsweise um solche der Formel 1

CH₂ = CH - OCOR¹ (1)

worin R¹ C₁-C₃₀-Hydroxyalkyl, vorzugsweise C₁-C₁₆-Hydroxyalkyl, speziell C₂-C₁₂-Hydroxyalkyl oder C₆-C₃₀-Hydroxyaryl bedeutet. Geeignete Vinylester umfassen 2-Hydroxyethylvinylester, -Hydroxypropylvinylester, 3-Hydroxypropylvinylester und 4-Hydroxybutylvinylester.

Bei den Acrylestern handelt es sich vorzugsweise um solche der Formel 2

CH₂ = CR² - COOR³ (2)

worin R² Wasserstoff oder Methyl und R³ C₁-C₃₀-Hydroxyalkyl, vorzugsweise C₁-C₁₆-Hydroxyalkyl, speziell C₂-C₁₂-Hydroxyalkyl bedeutet. Geeignete Acrylester umfassen Hydroxyethylacrylat, 2-Hydroxypropylacrylat, 3-Hydroxypropylacrylat, Hydroxyisopropylacrylat, 4-Hydroxybutylacrylat, Diethylenglykolmonoacrylat und Glycerinmonoacrylat sowie die entsprechenden Ester der Methacrylsäure.

Bei den Alkylvinylethern handelt es sich vorzugsweise um Verbindungen der Formel 3

CH₂ = CH - OR⁴ (3)

worin R⁴ C₁-C₃₀-Hydroxyalkyl, vorzugsweise C₁-C₁₆-Hydroxyalkyl, speziell C₂-C₁₂-Hydroxyalkyl bedeutet. Geeignete Alkylvinylether umfassen 2-Hydroxyethylvinylether, Hydroxypropylvinylether, Hexandiolmonovinylether, 4-(Hydroxybutyl)vinylether, Diethylenglykolmonovinylether und Cyclohexandimethanolmonovinylether.

Bei den Alkenen handelt es sich vorzugsweise um einfach ungesättigte Hydroxykohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Dimethylvinylcarbinol (= 2-Methyl-3-buten-2-ol), Allyloxypropandiol, 2-Buten-1,4-diol, 1-Buten-3-ol, 3-Buten-1-ol, 2-Buten-1-ol, 1-Penten-3-ol, 1-Penten-4-ol, 2-Methyl-3-buten-1-ol, 1-Hexen-3-ol, 5-Hexen-1-ol und 7-Octen-1,2-diol.

Der molare Anteil an hydroxyfunktionalisierten Comonomeren am Copolymeren A) beträgt vorzugsweise 0,5 bis 15 %, insbesondere 1 bis 12 %, speziell 1 bis 8 %. Die OH-Zahl der Copolymeren beträgt vorzugsweise zwischen 1 und 500, insbesondere zwischen 5 und 300 und speziell zwischen 10 und 200 mg KOH/g Polymer.

Die Copolymere A) enthalten neben Ethylen mindestens ein Comonomeres mit Hydroxylgruppen. Sie können noch weitere, beispielsweise ein, zwei oder drei weitere olefinisch ungesättigte Comonomere enthalten. Solche olefinisch ungesättigten Comonomere sind beispielsweise Vinylester, Acrylsäure, Methacrylsäure, Acrylester, Methacrylester, Vinylether oder Olefine. Besonders bevorzugte Vinylester sind Vinylacetat, Vinylpropionat und Vinylester von Neocarbonsäuren (Versaticsäuren= mit 8, 9, 10, 11 oder 12 Kohlenstoffatomen. Besonders bevorzugte Acryl- und Methacrylester sind solche mit Alkoholen mit 1 bis 20 Kohlenstoffatomen, insbesondere von Methanol, Ethanol, Propanol, n-Butanol, iso-Butanol und tert.-Butanol. Besonders bevorzugte Olefine sind solche mit 3 bis 10 Kohlenstoffatomen, speziell Propen, Isobutylen, Diisobutylen, Norbonen, 4-Methylpenten-1 und Hexen. Besonders bevorzugt sind Terpolymere aus Ethylen, einem hydroxyfunktionalisierten Comonomer und entweder Vinylacetat oder einem Vinylester einer Neocarbonsäure mit 8 bis 12 Kohlenstoffatomen. Enthalten die Copolymeren ein weiteres Comonomer, so beträgt dessen molarer Anteil vorzugsweise bis zu 15 %, insbesondere bis zu 12 %.

Bei den olefinisch ungesättigten Verbindungen, von denen sich die nicht-ethylenischen Struktureinheiten der weiteren Comonomere in Komponente B) ableiten, handelt es sich vorzugsweise um Vinylester, Acrylester, Methacrylester und/oder Alkylvinylether.

Bei den Vinylestern handelt es sich vorzugsweise um solche der Formel 4

CH₂ = CH - OCOR¹ (4)

worin R¹ C₁-C₃₀-Alkyl, vorzugsweise C₁-C₁₆-Alkyl, speziell C₁-C₁₂-Alkyl bedeutet.

In einer weiteren bevorzugten Ausführungsform steht R¹ für einen Neoalkylrest mit 7 bis 11 Kohlenstoffatomen, insbesondere mit 8, 9 oder 10 Kohlenstoffatomen. Geeignete Vinylester umfassen Vinylacetat, Vinylpropionat, 2-Ethylhexylvinylester, Vinyllaurat, Neononan-, Neodecan- und Neoundecansäurevinylester.

Bei den Acrylestern handelt es sich vorzugsweise um solche der Formel 5

CH₂ = CR² - COOR³ (5)

worin R² Wasserstoff oder Methyl und R³ C₁-C₃₀-Alkyl, vorzugsweise C₁-C₁₆-Alkyl, speziell C₁-C₁₂-Alkyl bedeutet. Geeignete Acrylester umfassen Methylacrylat, Methylmethacrylat, Ethylacrylat und 2-Ethylhexylacrylat, sowie die entsprechenden Ester der Methacrylsäure.

Bei den Alkylvinylethern handelt es sich vorzugsweise um Verbindungen der Formel 6

CH₂ = CH - OR⁴ (6)

worin R⁴ C₁-C₃₀-Alkyl, vorzugsweise C₁-C₁₆-Alkyl, speziell C₁-C₁₂-Alkyl bedeutet.

Der Comonomergehalt in Copolymer B liegt zwischen 5 und 25, bevorzugt zwischen 7 und 20 mol-%. Bei der Komponente B handelt es sich bevorzugt um sogenannte Fließverbesserer, die Mitteldestillaten vielfach zur Verbesserung der Kaltfließeigenschaften zugesetzt werden. Insbesondere sind hier Ethylen/Vinylacetat-, Ethylen/Vinylacetat/Versaticsäurevinylester, EthylenNinylpropionat-, Ethylen/Vinylacetat/Diisobutylen-, EthylenNinylacetat/4-Methylpenten- und Ethylen/Vinylacetat/Isobutylen-Copolymere zu nennen.

Im allgemeinen sind als Copolymer B) alle bekannten Co- bzw. Terpolymere und deren Mischungen einsetzbar, die für sich alleine genommen die Kaltfließeigenschaften von Mineralölen bzw. Mineralöldestillaten verbessern. Als geeignete Co- bzw. Terpolymere sind beispielsweise zu nennen:

Ethylen-Vinylacetat-Copolymere mit 10 - 40 Gew.-% Vinylacetat und 60 - 90 Gew.-% Ethylen;
die aus DE-A-34 43 475 bekannten Ethylen-Vinylacetat-Hexen-Terpolymere;
die in EP-A-0 203 554 beschriebenen Ethylen-Vinylacetat-Diisobutylen-Terpolymere;
die aus EP-A-0 254 284 bekannte Mischung aus einem Ethylen-Vinylacetat-Diisobutylen-Terpolymerisat und einem EthylenNinylacetat-Copolymer;
die in EP-A-0 405 270 offenbarten Mischungen aus einem Ethylen-Vinylacetat-Copolymer und einem Ethylen-Vinylacetat-N-Vinylpyrrolidon-Terpolymerisat;
die in EP-A-0 463 518 beschriebenen Ethylen/Vinylacetat/iso-Butylvinylether-Terpolymere;
die in EP-A-0 491 225 offenbarten Mischpolymerisate des Ethylens mit Alkylcarbonsäurevinylestern;
die aus EP-A-0 493 769 bekannten Ethylen/Vinylacetat/Neononansäurevinylester bzw. Neodecansäurevinylester-Terpolymere, die außer Ethylen 10 - 35 Gew.-% Vinylacetat und 1 - 25 Gew.-% der jeweiligen Neoverbindung enthalten;
die in DE-C-196 20 118 beschriebenen Terpolymere aus Ethylen, dem Vinylester einer oder mehrerer aliphatischer C₂-C₂₀-Monocarbonsäuren und 4-Methylpenten-1;
die in DE-C-196 20 119 offenbarten Terpolymere aus Ethylen, dem Vinylester einer oder mehrerer aliphatischer C₂-C₂₀-Monocarbonsäuren und Bicyclo[2.2.1]hepten.

Die Schmelzviskositäten der Copolymere A) und B) bei 140°C liegen unabhängig zwischen 10 und 1000 mPas und speziell zwischen 15 und 500 mPas.

Die Herstellung der Copolymere A und B erfolgt nach bekannten Verfahren (vgl. hierzu z.B. Ullmanns Encyclopädie der Technischen Chemie, 4. Auflage, Bd. 19, Seiten 169 bis 178). Geeignet sind die Polymerisation in Lösung, in Suspension, in der Gasphase und die Hochdruckmassepolymerisation. Vorzugsweise wendet man die Hochdruckmassepolymerisation an, die bei Drücken von 50 bis 400 MPa, vorzugsweise 100 bis 300 MPa und Temperaturen von 50 bis 350°C, vorzugsweise 100 bis 300°C, durchgeführt wird. Die Reaktion der Comonomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)-peroxidicarbonat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azobis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Die gewünschte Schmelzviskosität der Copolymerisate A) und B) wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Isobutyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Comonomerengemisch, angewandt.

Die Hochdruckmassepolymerisation wird in bekannten Hochdruckreaktoren, z.B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Benzol oder Toluol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0 271 738).

Zur Verwendung als Komponente A) sind ebenfalls Copolymere, enthaltend Struktureinheiten, die sich aus Ethylen und Vinylalkohol ableiten, geeignet. Copolymere dieser Art können hergestellt werden, indem man ein Copolymer, enthaltend Struktureinheiten, die sich von Ethylen und Vinylestern wie z.B. Vinylacetat ableiten, teilweise oder vollständig hydrolysiert.

Desgleichen können Copolymere, die sich aus Ethylen und Glycidylresten tragenden Monomeren ableiten, wie beispielsweise Glycidyl(meth)acrylat oder Glycidylallylether nach Hydrolyse mit Wasser, Alkoholen wie Methanol oder Glykol bzw. Aminen wie Ammoniak, Methylamin, Ethanolamin oder Diethanolamin erfindungsgemäß verwendet werden.

Weiterhin läßt sich die Schmierwirkung von Ölen in erfindungsgemäßer Weise dadurch verbessern, daß man ihnen Ethylencopolymere zusetzt, die oxalkylierte Säuregruppen enthalten. Dazu geeignete Ethylencopolymere sind beispielsweise solche mit Acrylsäure, Methacrylsäure, Itaconsäure, Fumarsäure, Maleinsäure oder Maleinsäureanhydrid. Zur Herstellung eines die Schmierwirkung von Ölen verbessernden Additivs werden diese säuregruppenhaltigen Copolymere an den Säuregruppen mit C₁-C₁₀-Alkylenoxiden oxalkyliert. Bevorzugte Alkylenoxide sind Ethylenoxid, Propylenoxid und Butylenoxid. Die Oxalkylierung erfolgt vorzugsweise mit einem Einsatz von 0,5 bis 10 mol, insbesondere 1 bis 5 mol und speziell 1 bis 2 mol Alkylenoxid pro mol Säuregruppe.

Die erfindungsgemäßen Mischungen von Copolymerisaten werden Mineralölen oder Mineralöldestillaten in Form von Lösungen oder Dispersionen die 10 bis 90 Gew.-%, bevorzugt 20 - 80 Gew.-%, der Mischungen enthalten, zugesetzt. Geeignete Lösungsoder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Exxsol-, ®ISOPAR- und Shellsol D-Typen sowie Alkohole, Ether und/oder Ester. Durch die Mischungen in ihren Schmiereigenschaften verbesserte Mineralöle oder Mineralöldestillate enthalten 0;001 bis 2, vorzugsweise 0,005 bis 0,5 Gew.-% Copolymerisate, bezogen auf das Destillat.

Die Komponenten A und B können den zu additivierenden Ölen dabei als Mischung oder auch getrennt voneinander zugesetzt werden.

Zur Herstellung von Additivpaketen für spezielle Problemlösungen können die erfindungsgemäßen Mischungen von Copolymerisaten auch zusammen mit weiteren öllöslichen Co-Additiven eingesetzt werden, die bereits für sich allein die Kaltfließeigenschaften und/oder Schmierwirkung von Rohölen, Schmierölen oder Brennölen verbessern. Beispiele solcher Co-Additive sind Kammpolymere sowie öllösliche Amphiphile.

In einer Ausführungsform der Erfindung werden die erfindungsgemäßen Mischungen von Copolymerisaten zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem C₆- bis C₂₄-α-Olefin und einem N-C₆- bis C₂₂-Alkylmaleinsäureimid (vgl. EP 0 320 766), ferner veresterte Olefin/ Maleinsäureanhydrid-Copolymere, Polymere und Copolymere von α-Olefinen und veresterte Copolymere von Styrol und Maleinsäureanhydrid.

Beispielsweise können Kammpolymere durch die Formel 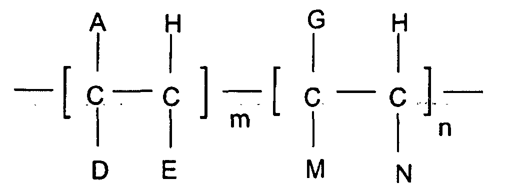 beschrieben werden. Darin bedeuten
- A: R', COOR', OCOR', R"-COOR' oder OR';
- D: H, CH₃, A oder R";
- E: H oder A;
- G: H, R", R"-COOR', einen Arylrest oder einen heterocyclischen Rest;
- M: H, COOR", OCOR", OR" oder COOH;
- N: H, R", COOR", OCOR, COOH oder einen Arylrest;
- R': eine Kohlenwasserstoffkette mit 8 bis 50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Das Mischungsverhältnis (in Gewichtsteilen) der erfindungsgemäßen Mischungen mit Kammpolymeren beträgt jeweils 1:10 bis 20:1, vorzugsweise 1:1 bis 10:1.

Zur Optimierung der Schmierwirkung können die erfindungsgemäßen Mischungen von Copolymeren in Mischung mit weiteren Lubricity-Additiven eingesetzt werden. Als Lubricity-Additive haben sich vorzugsweise Amphiphile wie beispielsweise Fettalkohole, Fettsäuren und Dimerfettsäuren sowie deren Ester und Partialester mit Glykolen (gemäß DE-A-15 94 417), Polyolen wie Glycerin (gemäß EP-A-0 680 506, EP-A-0 739 970) oder Hydroxyaminen (gemäß WO-96/21709) bewährt.

Die erfindungsgemäßen Mischungen sind geeignet, die Schmiereigenschaften und Kaltfließeigenschaften von tierischen, pflanzlichen oder mineralischen Ölen sowie von alkanolhaltigen Kraftstoffen zu verbessern. Dabei sind die erforderlichen Dosierraten deutlich niedriger als aus der Wirksamkeit der Einzelkomponenten zu erwarten wäre. Da Polymere B diesen Ölen in der Regel zur Verbesserung der Kaltfließeigenschaften zugesetzt werden, wird durch den Einsatz der erfindungsgemäßen Mischungen die für eine ausreichende Schmierwirkung erforderliche Dosierrate der Komponente B stark abgesenkt. Die erfindungsgemäßen Mischungen sind für die Verwendung in Mitteldestillaten besonders gut geeignet. Als Mitteldestillate bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Vorzugsweise werden die erfindungsgemäßen Mischungen von Copolymeren in solchen Mitteldestillaten verwendet, die 0,5 Gew.-% Schwefel und weniger, insbesondere weniger als 200 ppm Schwefel und in speziellen Fällen weniger als 50 ppm Schwefel enthalten. Es handelt sich dabei im allgemeinen um solche Mitteldestillate, die einer hydrierenden Raffination unterworfen wurden, und die daher nur geringe Anteile an polyaromatischen und polaren Verbindungen enthalten, die ihnen eine natürliche Schmierwirkung verleihen. Die erfindungsgemäßen Mischungen werden weiterhin vorzugsweise in solchen Mitteldestillaten verwendet, die 95 %-Destillationspunkte unter 370°C, insbesondere 350°C und in Spezialfällen unter 330°C aufweisen.

Die Mischungen können allein oder auch zusammen mit anderen Additiven verwendet werden, z.B. mit anderen Stockpunkterniedrigern oder Entwachsungshilfsmitteln, mit Korrosionsinhibitoren, Antioxidantien, Detergenzzusätzen, Schlamminhibitoren, Dehazern und Zusätzen zur Erniedrigung des Cloud-Points.

Die Wirksamkeit der erfindungsgemäßen Mischungen als Schmierverbesserer wird durch die nachfolgenden Beispiele näher erläutert.

### Beispiele

### Charakterisierung der eingesetzten Additive

Der Vinylacetatgehalt wird durch Pyrolyse des Polymerisats bestimmt. Hierzu werden 100 mg des Polymerisats mit 200 mg reinem Polyethylen in einem Pyrolysekolben 5 Minuten bei 450 C in einem geschlossenen System unter Vakuum thermisch gespalten und die Spaltgase in einem 250 ml-Rundkolben aufgefangen. Das Spaltprodukt Essigsäure wird mit einer NaJ/KJO₃-Lösung umgesetzt und mit Na₂S₂O₃-Lösung das freiwerdende Jod titriert. Die Comonomergehalte sind in Gew.-% angegeben.

Die Bestimmung der hydroxyfunktionellen Comonomere erfolgt durch Bestimmung der OH-Zahl durch Umsetzung des Polymers mit überschüssigem Acetanhydrid und anschließender Titration der gebildeten Essigsäure mit KOH.

Die Bestimmung der Viskosität erfolgt gemäß ISO 3219 (B) mit einem Rotationsviskosimeter (Haake RV 20) mit Platte-Kegel-Meßsystem bei 140°C.

Alle Additive werden als 50%ige Lösungen in Solvent Naphtha (Komponente A) bzw. Kerosin (Komponente B) eingesetzt.

**Tabelle 1:**

| Charakterisierung der eingesetzten Additive A | | | | |
|---|---|---|---|---|
| Beispiel Nr. | Vinylester | OH-Monomer | V₁₄₀ [mPas] | OH-Zahl |
| A1 | 22 % Vinylacetat | 10 % HEMA | 97 | 43 |
| A2 | 22 % Vinylacetat | 6 % HEMA | 77 | 28 |
| A3 | 28 % Vinylacetat | 8 % HEMA | 171 | 38 |
| A4 | 25 % Vinylacetat | 5 % DMVC | 101 | 24 |
| A5 | 28 % VeoVa 10 | 9 % HEMA | 96 | 37 |
| HEMA = Hydroxyethylmethacrylat DMVC = Dimethylvinylcarbinol VEOVA 10 = Neodecansäurevinylester | | | | |

**Tabelle 2:**

| Charakterisierung der eingesetzten Additive B | | |
|---|---|---|
| Beispiel Nr. | Vinylester | V₁₄₀ [mPas] |
| B1 | 32 % Vinylacetat | 140 |
| B2 | 31 % Vinylacetat + 8 % Neodecansäurevinylester | 125 |
| B3 | 30 % Vinylacetat + 3 % 4-Methylpenten-1 | 179 |
| B4 | Mischung aus gleichen Teilen B1 und B2 | 130 |

**Tabelle 3**

| Charakterisierung der Testöle: Die Bestimmung der Siedekenndaten erfolgt gemäß ASTM D-86, die Bestimmung desCFPP-Werts gemäß EN 116 und die Bestimmung des Cloud Points gemäß ISO 3015. | | | | |
|---|---|---|---|---|
| | Testöl 1 | Testöl 2 | Testöl 3 | Testöl 4 |
| Siedebeginn [°C] | 198 | 182 | 163 | 165 |
| 20 % [°C] | 246 | 202 | 201 | 209 |
| 30 % [°C] | 260 | 208 | 227 | 233 |
| 90 % [°C] | 339 | 286 | 305 | 335 |
| 95 % [°C] | 355 | 302 | 320 | 355 |
| Cloud Point [°C] | -5 | -29 | 1 | -9,2 |
| CFPP [°C] | -7 | -32 | -2 | -11 |
| S-Gehalt [ppm] | 26 | 3 | 326 | 330 |
| Dichte [g/cm ³ ] | 0,832 | 0,819 | 0,841 | 0,851 |
| Wear Scar [µm] | 564 | 609 | 571 | 598 |

### Schmierwirkung in Mitteldestillaten

Die Schmierwirkung der Additive wurde mittels eines HFRR-Geräts der Firma PCS Instruments an additivierten Ölen bei 60 C durchgeführt. Der High Frequency Reciprocating Rig Test (HFRR) ist beschrieben in D. Wei, H. Spikes, Wear, Vol. 111, No.2, p. 217, 1986. Die Ergebnisse sind als Reibungskoeffizient und Wear Scar angegeben. Ein niedriger Reibungskoeffizient (Friction) und ein niedriger Wear Scar zeigen eine gute Schmierwirkung.

**Tabelle 4:**

| Wear Scar in Testöl 1 | | | | |
|---|---|---|---|---|
| Dosierrate A | Dosierrate B | Wear Scar | Film | Friction |
| 200 ppm A1 | - | 560 | 16 % | 0,34 |
| 300 ppm A1 | - | 535 | 20 % | 0,28 |
| 400 ppm A1 | - | 238 | 91 % | 0,12 |
| - | 100 ppm B1 | 560 | 15 % | 0,35 |
| - | 300 ppm B1 | 550 | 17 % | 0,35 |
| 300 ppm A1 | 100 ppm B1 | 203 | 95 % | 0,12 |
| 200 ppm A1 | 100 ppm B1 | 285 | 87 % | 0,14 |
| 150 ppm A1 | 100 ppm B1 | 376 | 74 % | 0,23 |
| 400 ppm A3 | - | 408 | 58 % | 0,25 |
| 200 ppm A3 | 100 ppm B1 | 247 | 90 % | 0,13 |
| - | 300 ppm B3 | 565 | 15 % | 0,35 |
| 300 ppm A4 | - | 490 | 12 % | 0,36 |
| 150 ppm A4 | 100 ppm B1 | 227 | 92 % | 0,12 |

**Tabelle 5:**

| Wear Scar in Testöl 2 | | | | |
|---|---|---|---|---|
| Dosierrate | Dosierrate | Wear Scar | Film | Friction |
| 200 ppm A1 | - | 559 | 46 % | 0,28 |
| 300 ppm A1 | - | 435 | 75 % | 0,20 |
| 400 ppm A1 | - | 280 | 90 % | 0,17 |
| - | 100 ppm B1 | 595 | 20 % | 0,42 |
| - | 300 ppm B1 | 580 | 25 % | 0,40 |
| 200 ppm A1 | 100 ppm B1 | 350 | 82 % | 0,17 |
| 100 ppm A1 | 100 ppm B1 | 443 | 66 % | 0,19 |
| 800 ppm A5 | - | 371 | 69 % | 0,20 |
| 600 ppm A5 | 100 ppm B1 | 346 | 82 % | 0,16 |

**Tabelle 6:**

| Wear Scar in Testöl 3 | | | | |
|---|---|---|---|---|
| Dosierrate A2 | Dosierrate B2 | Wear Scar | Film | Friction |
| 200 ppm | - | 320 | 83 % | 0,15 |
| 200 ppm | - | 268 | 93 % | 0,15 |
| - | 200 ppm | 565 | 31 % | 0,22 |
| - | 300 ppm | 550 | 30 % | 0,23 |
| 150 ppm | 150 ppm | 259 | 94 % | 0,13 |
| 100 ppm | 100 ppm | 298 | 82 % | 0,14 |
| 100 ppm | 200 ppm | 272 | 93 % | 0,13 |
| 67 ppm | 133 ppm | 304 | 80 % | 0,14 |
| 60 ppm | 240 ppm | 288 | 83 % | 0,14 |

**Tabelle 7:**

| Wear Scar in Testöl 4 | | | | |
|---|---|---|---|---|
| Dosierrate A2 | Dosierrate B4 | Wear Scar | Film | Friction |
| - | 400 ppm | 470 | 48 % | 0,16 |
| 400 ppm | - | 310 | 89 % | 0,16 |
| 100 ppm | 300 ppm | 278 | 92 % | 0,15 |
| 200 ppm | 200 ppm | 265 | 93 % | 0,15 |
| 100 ppm | 200 ppm | 305 | 82 % | 0,17 |

### Liste der verwendeten Handelsbezeichnungen

- Solvent Naphtha: aromatische Lösemittelgemische mit Siedebereich 180
- ®Shellsol AB: bis 210°C
- ®Solvesso 150 ®Solvesso 200: aromatisches Lösemittelgemisch mit Siedebereich 230 bis 287°C
- ®Exxsol: Dearomatisierte Lösemittel in verschiedenen Siedebereichen, beispielsweise ®Exxsol D60: 187 bis 215°C
- ®ISOPAR (Exxon): isoparaffinische Lösemittelgemische in verschiedenen Siedebereichen, beispielsweise ®ISOPAR L: 190 bis 210°C
- ®Shellsol D: hauptsächlich aliphatische Lösemittelgemische in verschiedenen Siedebereichen

## Patentansprüche

1. Mischungen, enthaltend
A) 10 bis 90 Gew.-% wenigstens eines Copolymers mit einer Schmelzviskosität bei 140°C von 10 bis 1000 mPas, enthaltend Struktureinheiten, die sich aus Ethylen ableiten und Struktureinheiten, die sich aus Vinylestern, Acrylestern, Methacrylestern, Alkylvinylethern und/oder Alkenen, die Hydroxyalkyl-, Hydroxyalkenyl-, Hydroxycycloalkyl- oder Hydroxyarylreste tragen, welche wenigstens eine Hydroxylgruppe, die an einer beliebigen Stelle des Restes stehen kann, ableiten
und
B) 90 bis 10 Gew.-% wenigstens eines Copolymers, bestehend aus Struktureinheiten aus Ethylen und Struktureinheiten aus Vinylestern, olefinisch ungesättigten Ethern oder (Meth)Acrylsäureestern, wobei Copolymer B) auch ein Terpolymer ausgewählt aus der Gruppe Ethylen/Vinylacetat/Diisobutylen-, Ethylen/Vinylacetat/Isobutylen-, Ethylen-Vinylacetat-Hexen-Terpolymere, oder Terpolymere aus Ethylen, dem Vinylester einer oder mehrerer aliphatischer C₂-C₂₀-Monocarbonsäuren und 4-Methylpenten-1 sein kann.

2. Mischung nach Anspruch 1, **dadurch gekennzeichnet, daß** Komponente A) ein olefinisch ungesättigtes Comonomer der Formel 1 enthält
CH₂ = CH - OCOR¹ (1)
worin R¹ C₁-C₃₀-Hydroxyalkyl oder C₆-C₃₀-Hydroxyaryl bedeutet

3. Mischung nach Anspruch 1 und/oder 2, **dadurch gekennzeichnet, daß** Komponente A) ein olefinisch ungesättigtes Comonomer der Formel 2 enthält
CH₂ = CR² - COOR³ (2)
worin R² Wasserstoff oder Methyl und R³ C₁-C₃₀-Hydroxyalkyl bedeutet.

4. Mischung nach einem oder mehreren der Ansprüche 1 bis 3, **dadurch gekennzeichnet, daß** Komponente A) ein olefinisch ungesättigtes Comonomer der Formel 3 enthält
CH₂ = CH - OR⁴ (3)
worin R⁴ C₁-C₃₀-Hydroxyalkyl bedeutet.

5. Mischung nach einem oder mehreren der Ansprüche 1 bis 4, **dadurch gekennzeichnet, daß** Komponente A) als olefinisch ungesättigtes Comonomer ein Hydroxyalken mit 3 bis 30 Kohlenstoffatomen enthält.

6. Mischung nach einem oder mehreren der Ansprüche 1 bis 5, **dadurch gekennzeichnet, daß** der molare Anteil des hydroxyfunktionalisierten Comonomeren am Copolymeren A) 0,5 bis 15 % beträgt.

7. Mischung nach einem oder mehreren der Ansprüche 1 bis 6, **dadurch gekennzeichnet, daß** die Zahl der OH-Gruppen pro Molekül des Copolymeren A) zwischen 1 und 500 mg KOH/g Polymer liegt.

8. Mischung nach einem oder mehreren der Ansprüche 1 bis 7, **dadurch gekennzeichnet, daß** die Copolymere B) Struktureinheiten enthalten, die sich von Verbindungen der Formel 4 ableiten
CH₂ = CH - OCOR¹ (4)
worin R¹ C₁-C₃₀-Alkyl bedeutet.

9. Mischungen nach einem oder mehreren der Ansprüche 1 bis 8, **dadurch gekennzeichnet, daß** die Copolymere B) Struktureinheiten enthalten, die sich von Verbindungen der Formel (5) ableiten
CH₂ = CR² - COOR³ (5)
worin R² Wasserstoff oder Methyl und R³ C₁-C₃₀-Alkyl bedeutet.

10. Mischungen nach einem oder mehreren der Ansprüche 1 bis 9, **dadurch gekennzeichnet, daß** die Copolymere B) Struktureinheiten enthalten, die sich von Verbindungen der Formel (6) ableiten
CH₂ = CH - OR⁴ (6)
worin R⁴ C₁-C₃₀-Alkyl bedeutet.

11. Brennstofföle, enthaltend Mitteldestillate mit maximal 0,5 Gew.-% Schwefel und eine Mischung nach einem oder mehreren der Ansprüche 1 bis 10.

12. Verfahren zur Herstellung von Mineralölen und Mineralöldestillaten mit verbesserter Schmierwirkung, **dadurch gekennzeichnet, daß** man den Ölen eine Mischung nach einem oder mehreren der Ansprüche 1 bis 10 zusetzt.

## Claims

1. A mixture comprising
A) from 10 to 90% by weight of at least one copolymer having a melt viscosity at 140°C of from 10 to 1000 mPas and comprising structural units derived from ethylene and structural units derived from vinyl esters, acrylates, methacrylates, alkyl vinyl ethers and/or alkenes carrying hydroxyalkyl, hydroxyalkenyl, hydroxycycloalkyl or hydroxyaryl radicals which contain at least one hydroxyl group, which can be in any desired position of the radical, and
B) from 90 to 10% by weight of at least one copolymer consisting of structural units from ethylene and structural units from vinyl esters, olefinically unsaturated ethers or (meth)acrylates, wherein copolymer B) can also be a terpolymer selected from the group consisting of ethylene-vinyl acetate-diisobutylene terpolymers, ethylene-vinyl acetate-isobutylene terpolymers, ethylene-vinyl acetate-hexene terpolymers, or terpolymers of ethylene, the vinyl ester of one or more aliphatic C₂-C₂₀-monocarboxylic acids and 4-methyl-1-pentene.

2. A mixture as claimed in claim 1, **characterized in that** component A) comprises an olefinically unsaturated comonomer of the formula 1
CH₂ = CH - OCOR¹ (1)
in which R¹ is C₁-C₃₀-hydroxyalkyl or C₆-C₃₀-hydroxyaryl.

3. A mixture as claimed in claim 1 and/or 2, **characterized in that** component A) comprises an olefinically unsaturated comonomer of the formula 2
CH₂ = CR² - COOR³ (2)
in which R² is hydrogen or methyl, and R³ is C₁-C₃₀-hydroxyalkyl.

4. A mixture as claimed in one or more of claims 1 to 3, **characterized in that** component A) comprises an olefinically unsaturated comonomer of the formula 3
CH₂ = CH - OR⁴ (3)
in which R⁴ is C₁-C₃₀-hydroxyalkyl.

5. A mixture as claimed in one or more of claims 1 to 4, **characterized in that** component A) comprises an olefinically unsaturated comonomerwhich is a hydroxyalkene having 3 to 30 carbon atoms.

6. A mixture as claimed in one or more of claims 1 to 5, **characterized in that** the molar fraction of the hydroxy-functionalized comonomer in the copolymer A) is from 0.5 to 15%.

7. A mixture as claimed in one or more of claims 1 to 6, **characterized in that** the number of OH groups per molecule of the copolymer A) is between 1 and 500 mg KOH/g of polymer.

8. A mixture as claimed in one or more of claims 1 to 7, **characterized in that** the copolymers B) comprise structural units derived from compounds of the formula 4
CH₂ = CH - OCOR¹ (4)
in which R¹ is C₁-C₃₀-alkyl.

9. A mixture as claimed in one or more of claims 1 to 8, **characterized in that** the copolymers B) comprise structural units derived from compounds of the formula (5)
CH₂ = CR² - COOR³ (5)
in which R² is hydrogen or methyl, and R³ is C₁-C₃₀-alkyl.

10. A mixture as claimed in one or more of claims 1 to 9, **characterized in that** the copolymers B) comprise structural units derived from compounds of the formula (6)
CH₂ = CH - OR⁴ (6)
in which R⁴ is C₁-C₃₀-alkyl.

11. A fuel oil comprising middle distillates containing a maximum of 0.5% by weight of sulfur and a mixture as claimed in one or more of claims 1 to 10.

12. A process for the preparation of mineral oils and mineral oil distillates having an improved lubricating action, **characterized in that** it comprises adding a mixture as claimed in one or more of claims 1 to 10 to the oils.

## Revendications

1. Mélanges contenant
A) de 10 à 90 % en masse d'au moins un copolymère ayant une viscosité à l'état fondu de 10 à 1 000 mPas à 140°C, contenant des unités de structure dérivant de l'éthylène et des unités de structure dérivant d'esters vinyliques, d'esters acryliques, d'esters méthacryliques, d'éthers d'alkyle et vinyle et/ou d'alcènes, qui portent des restes hydroxyalkyle, hydroxyalcényle, hydroxycycloalkyle ou hydroxyaryle, contenant au moins un groupe hydroxyle pouvant se trouver en une position quelconque du reste, et
B) de 90 à 10 % en masse d'au moins un copolymère constitué d'unités de structure dérivées de l'éthylène et d'unités de structure dérivées d'esters vinyliques, d'éthers à insaturation oléfinique ou d'esters d'acide (méth)acrylique, le copolymère B) pouvant aussi être un terpolymère choisi dans le groupe des terpolymères éthylène/acétate de vinyle/diisobutylène, éthylène/acétate de vinyle/isobutylène, éthylène/acétate de vinyle/hexène ou des terpolymères d'éthylène, de l'ester vinylique d'un ou plusieurs acides monocarboxyliques aliphatiques en C₂-C₂₀ et de 4-méthylpent-1-ène.

2. Mélange selon la revendication 1, **caractérisé en ce que** le constituant A) contient un comonomère à insaturation oléfinique de formule 1
CH₂ = CH - OCOR¹ (1)
dans laquelle R¹ représente un reste hydroxyalkyle en C₁-C₃₀ ou hydroxyaryle en C₆-C₃₀.

3. Mélange selon la revendication 1 et/ou 2, **caractérisé en ce que** le constituant A) contient un comonomère à insaturation oléfinique de formule 2
CH₂ = CR² - COOR³ (2)
dans laquelle R² représente un atome d'hydrogène ou un reste méthyle et R³ représente un reste hydroxyalkyle en C₁-C₃₀.

4. Mélange selon l'une ou plusieurs des revendications 1 à 3, **caractérisé en ce que** le constituant A) contient un comonomère à insaturation oléfinique de formule 3
CH₂ = CH - OR⁴ (3)
dans laquelle R⁴ représente un reste hydroxyalkyle en C₁-C₃₀.

5. Mélange selon l'une ou plusieurs des revendications 1 à 4, **caractérisé en ce que** le constituant A) contient comme comonomère à insaturation oléfinique un hydroxyalcène de 3 à 30 atomes de carbone.

6. Mélange selon l'une ou plusieurs des revendications 1 à 5, **caractérisé en ce que** la fraction molaire du comonomère à fonction hydroxy dans le copolymère A) est de 0,5 à 15%.

7. Mélange selon l'une ou plusieurs des revendications 1 à 6, **caractérisé en ce que** l'indice des groupes OH par molécule du copolymère A) est compris entre 1 et 500 mg de KOH/g de polymère.

8. Mélange selon l'une ou plusieurs des revendications 1 à 7, **caractérisé en ce que** les copolymères B) contiennent des unités de structure qui dérivent de composés de formule 4
CH₂ = CH - OCOR¹ (4)
dans laquelle R¹ représente un reste alkyle en C₁-C₃₀.

9. Mélange selon l'une ou plusieurs des revendications 1 à 8, **caractérisé en ce que** les copolymères B) contiennent des unités de structure qui dérivent de composés de formule (5)
CH₂ = CR² - COOR³ (5)
dans laquelle R² représente un atome d'hydrogène ou un reste méthyle et R³ un reste alkyle en C₁-C₃₀.

10. Mélange selon l'une ou plusieurs des revendications 1 à 9, **caractérisé en ce que** les copolymères B) contiennent des unités de structure qui dérivent de composés de formule (6)
CH₂ = CH - OR⁴ (6)
dans laquelle R⁴ représente un reste alkyle en C₁-C₃₀.

11. Huiles combustibles contenant des distillats moyens contenant au plus 0,5 % en masse de soufre et un mélange selon l'une ou plusieurs des revendications 1 à 10.

12. Procédé de préparation d'huiles minérales et de distillats d'huiles minérales ayant une activité lubrifiante améliorée, **caractérisé en ce que** l'on ajoute aux huiles un mélange selon l'une ou plusieurs des revendications 1 à 10.
